# EUROPEAN PATENT SPECIFICATION

(11) **EP 1 903 826 B1**
(45) Date of publication and mention of the grant of the patent: **21.02.2018**
(21) Application number: 07106659.1
(22) Date of filing: 20.04.2007
(51) Int. Cl.: H04W 74/08

(54) **Mobile communication terminal, mobile communication system, base station and communication method**
Mobiles Kommunikationsendgerät, mobiles Kommunikationssystem, Basisstation und Kommunikationsverfahren
Terminal de communication mobile, système de communication mobile, et procédé de communication

(30) Priority: 20.09.2006 JP 2006254400
(43) Date of publication of application: 26.03.2008
(73) Proprietor: Fujitsu Ltd., Kawasaki-shi, Kanagawa 211-8588 (JP)
(72) Inventor: Obuchi, Kazuhisa, Kawasaki-shi Kanagawa 211-8588 (JP); Tajima, Yoshiharu, Kawasaki-shi Kanagawa 211-8588 (JP); Kawabata, Kazuo, Kawasaki-shi Kanagawa 211-8588 (JP); Ohta, Yoshiaki, Kawasaki-shi Kanagawa 211-8588 (JP); Furukawa, Hideto, Kawasaki-shi Kanagawa 211-8588 (JP); Kawasaki, Yoshihiro, Kawasaki-shi Kanagawa 211-8588 (JP)
(74) Representative: Fenlon, Christine Lesley

(56) References cited:
- LG ELECTRONICS: "Uplink resource request for uplink scheduling", 3GPP DRAFT; R1-062318 - UL RESOURCE REQUEST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Tallinn; 20060823, 23 August 2006 (2006-08-23), XP050102842, [retrieved on 2006-08-23]
- LG ELECTRONICS INC: "Resource Request in Synchronized Case", 3GPP DRAFT; R2-062421_RESOURCE_REQUEST_IN_SYNC_CASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Tallinn; 20060824, 24 August 2006 (2006-08-24), XP050132005, [retrieved on 2006-08-24]
- "Universal Mobile Telecommunications System (UMTS); Physical layer procedures (FDD) (3GPP TS 25.214 version 7.0.0 Release 7); ETSI TS 125 214", 96. MPEG MEETING;21-3-2011 - 25-3-2011; GENEVA; (MOTION PICTURE EXPERTGROUP OR ISO/IEC JTC1/SC29/WG11), LIS, SOPHIA ANTIPOLIS CEDEX, FRANCE, vol. 3-R1, no. V7.0.0, 1 March 2006 (2006-03-01), XP014034263, ISSN: 0000-0001

## Description

### BACKGROUND OF THE INVENTION

### 1. Field of the Invention

The present invention relates to a mobile communication terminal, a mobile communication system, a base station, and a communication method for them. More particularly, the invention relates to a mobile communication system that employs a random access scheme in which a mobile communication terminal transmits a radio resource reservation request signal to a base station prior to the transmission of upstream traffic, and also relates to a mobile communication terminal, a base station, and a communication method for use in such a mobile communication system.

### 2. Description of the Related Art

LG ELECTRONICS: "Uplink resource request for uplink scheduling", 3GPP draft R1 - 062318, vol RAN WG1, #46 discloses some detailed methods that can be used in synchronizing the state of mobile communication terminals.

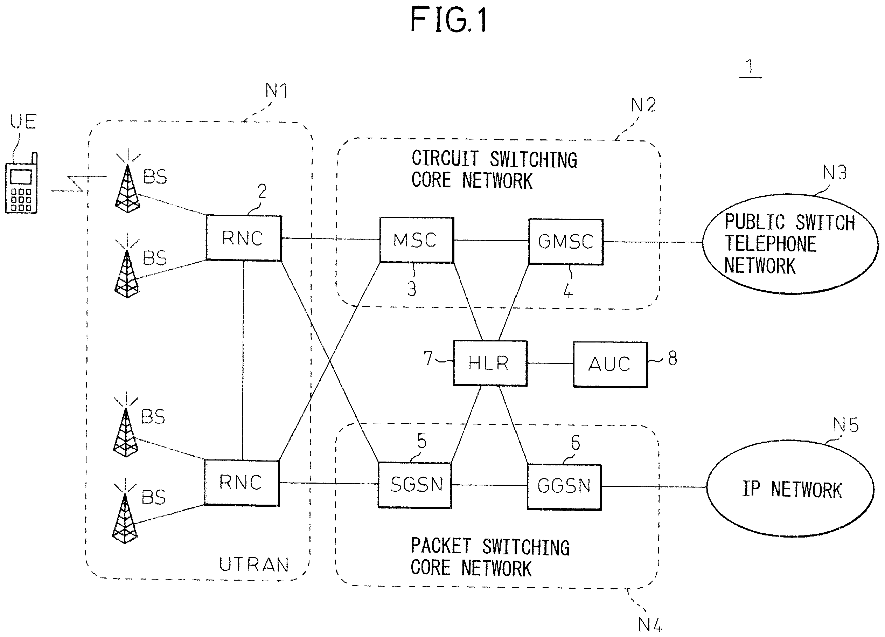

Fig. 1 shows the configuration of UMTS (Universal Mobile Telecommunications System), a mobile communication system standardized by the 3GPP (3rd Generation Partnership Project). A radio communication system 1 comprises a radio access network N1 called UTRAN (Universal Terrestrial Radio Access Network), a circuit switching core network N2 which connects the radio access network N1 to a public switch telephone network N3 to provide radio switched service, and a packet switching core network N4 which connects the radio access network N1 to an Internet protocol (IP) network N5 to provide packet switched service.

The radio access network N1 comprises base stations BSs and radio network controllers (RNCs) 2 for controlling the BSs, and is responsible for transferring user information such as voice and packets from mobile communication terminals UEs to the core networks N2 and N4 and vice versa and for allocating radio resources necessary for the communications between them.

The circuit switching core network N2 comprises a mobile switching center (MSC) 3 and a gateway mobile switching center (GMSC) 4, and is responsible for establishing communication links between terminals by circuit switching.

The packet switching core network N4 comprises: a serving GPRS support node (SGSN) 5 which keeps track of the position of each mobile communication terminal UE accessing the packet switched domain and which transfers user traffic between a gateway GPRS support node (GGSN) 6 described below and the radio access network N1; and the GGSN 6 which controls the connection between the mobile communication system 1 and the external IP network N5 in accordance with a connection request from the mobile communication terminal UE, the packet switching core network N4 thus providing IP connections between mobile communication terminals UEs or between a mobile communication terminal UE and the external IP network.

The radio communication system 1 further includes a home location register (HLR) 7 and an authentication center (AUC) 8 which performs authentication and manages authentication and other secret information.

When there occurs data to be transmitted in the upstream direction, i.e., upstream traffic going from the mobile communication terminal UE to the base station BS, and when the upstream channel for transmission is not yet established, such as when the mobile communication terminal UE is brought from a standby state to a call-requesting state, the mobile communication terminal UE must notify the base station BS of the occurrence of the upstream traffic by some means.

Conventionally, a random access scheme has been used in order to enable the mobile communication terminal UE to notify the base station BS of the occurrence of the upstream traffic. In this scheme, prior to the transmission of the upstream traffic, the mobile communication terminal UE transmits a reservation request signal to the base station BS in order to reserve a radio resource to be used for the transmission of the upstream traffic.

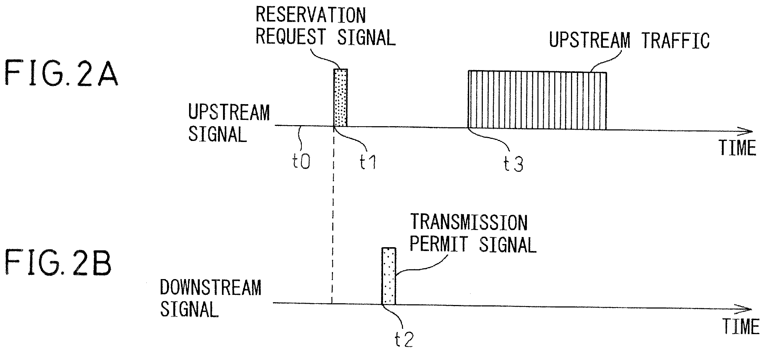

Figs. 2A and 2B are diagrams for explaining how the radio resource necessary for the transmission of the upstream traffic is reserved in accordance with the prior art random access scheme. Fig. 2A shows a time chart for an upstream signal to be transmitted from the mobile communication terminal UE to the base station BS, and Fig. 2B shows a time chart for a downstream signal to be transmitted from the base station BS to the mobile communication terminal UE.

When upstream traffic occurs at time t0, the mobile communication terminal UE transmits at time t1 a reservation request signal to the base station BS in order to reserve the radio resource to be used for the transmission of the upstream traffic.

Upon receiving the reservation request signal, the base station BS allocates the mobile communication terminal UE the radio resource necessary for the transmission of the upstream traffic. Here, the base station BS allocates the radio resource to the mobile communication terminal UE by determining, for example, the transmission time, carrier frequency, spreading code, etc. that the mobile communication terminal UE uses for the transmission of the upstream traffic.

Then, at time t2, the base station BS transmits a transmission permit signal to the mobile communication terminal UE to permit the transmission of the upstream traffic. The mobile communication terminal UE that received the transmission permit signal starts the transmission of the upstream traffic at time t3.

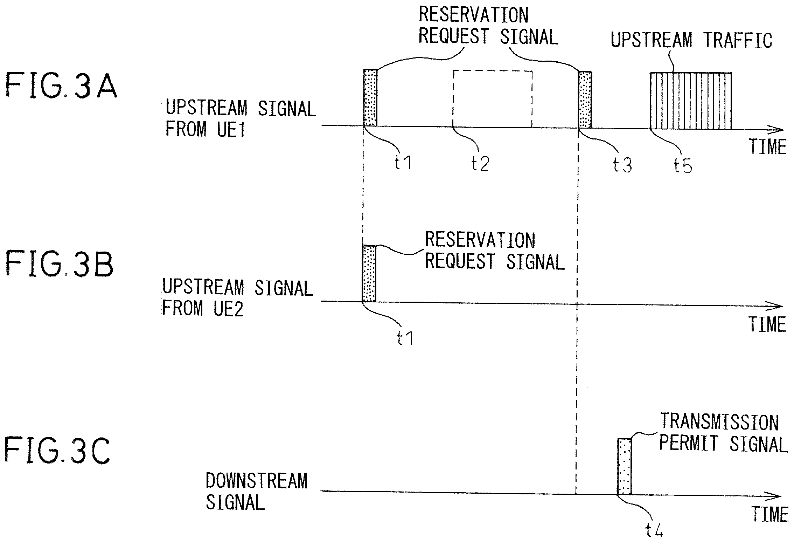

The prior art scheme has required that the mobile communication terminal UE transmit the reservation request signal by using a channel common to all mobile communication terminals. This has led to the problem that if a plurality of mobile communication terminals transmit reservation request signals at the same instant, the reservation request signals collide with each other and fail to reach the base station BS. How this can occur will be described with reference to Figs. 3A to 3C. Figs. 3A and 3B show time charts for the upstream signals to be transmitted to the base station BS from different mobile communication terminals UE1 and UE2, respectively, and Fig. 3C shows a time chart for the downstream signal to be transmitted from the base station BS to the mobile communication terminal UE1.

When the two mobile communication terminals UE1 and UE2 transmit reservation request signals at the same instant at time t1, these reservation request signals collide with each other and fail to reach the base station BS. As a result, the mobile communication terminal UE1 cannot transmit the upstream traffic to the base station at time t2 at which it should have been able to transmit the upstream traffic. Thereafter, the mobile communication terminal UE1 retransmits the reservation request signal at time t3, receives the transmission permit signal at time t4, and can then transmit the upstream traffic. In this case, however, the transmit time of the upstream traffic is delayed to time 15 compared with the time t2 at which the upstream traffic could otherwise have been transmitted.

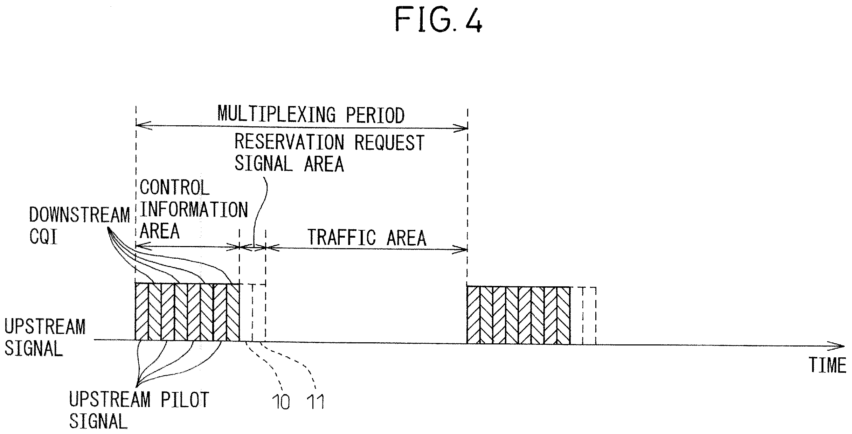

By increasing the amount of radio resources that can be used for the transmission of the reservation request signals from the mobile communication terminals UEs to the base station BS, the probability that the reservation request signals from the mobile communication terminals UEs will collide with each other can be reduced, which serves to reduce the delay such as described above. However, if the amount of radio resources available for the transmission of the reservation request signals is increased, there arises the problem that the amount of radio resources that can be allocated for the transmission of the upstream traffic decreases, as the former eats into the latter. Why this is so will be explained with reference to Fig. 4.

Fig. 4 is diagram showing an example of how the radio resources are allocated to the upstream signals to be transmitted from the mobile communication terminals UEs to be base station BS. In the example shown in Fig. 4, each mobile communication terminal UE transmits control information, such as downstream channel quality information (for example, CQI: Channel Quality Indicator), upstream pilot signal, etc., as well as the reservation request signal and the upstream traffic. For simplicity of explanation, it is assumed here that the radio resources are allocated to the respective signals by causing the respective mobile communication terminals UEs to transmit the signals at different times in time-division multiplexing fashion.

A control information area for transmitting the downstream channel quality information and upstream pilot signals, a reservation request signal area for transmitting the reservation request signals, and a traffic area for transmitting the traffic are provided within one multiplexing period, i.e., the period in which one set of time-division multiplexed data is transmitted.

Here, the downstream channel quality information refers to the information indicating the channel quality of the downlink, i.e., the downstream channel along which signals are transmitted from the base station BS to the mobile communication terminal UE; the mobile communication terminal UE receives a downstream pilot signal being transmitted via a common pilot channel from the base station BS, measures the channel quality of the downlink propagation path, and transmits the result as the downstream channel quality information to the base station BS.

On the other hand, the upstream pilot signal is a pilot signal by which the base station BS measures the channel quality of the uplink, i.e., the upstream channel along which signals are transmitted from the mobile communication terminal UE to the base station BS.

Here, the downstream channel quality information and the upstream pilot signal must be transmitted from each individual mobile communication terminal UE to the base station BS; therefore, the size of the control information area is determined in accordance with the number of mobile communication terminals UEs that can be simultaneously connected to the base station BS. In the example of Fig. 4, the size of the control information area is determined so that four mobile communication terminals UEs can transmit their downstream channel quality information and upstream pilot signals at different times.

Here, if the size of the control information area is fixed, then it can be seen from Fig. 4 that if the amount of radio resources available for the transmission of the reservation request signals is increased, the amount of radio resources that can be allocated for the transmission of the upstream traffic decreases, because the former eats into the latter. Conversely, it can be seen that if the amount of radio resources allocated for the transmission of the upstream traffic is increased, the amount of radio resources that can be used for the transmission of the reservation request signals decreases, increasing the probability that the reservation request signals from the different mobile communication terminals UEs will collide with each other.

### SUMMARY OF THE INVENTION

In view of the above problem, in a mobile communication system that employs a random access scheme in which a radio resource reservation request signal is transmitted to a base station prior to the transmission of upstream traffic, it is an object of the present invention to prevent collisions of reservation request signals between mobile communication terminals, without decreasing the amount of radio resources that can be allocated for the transmission of the upstream traffic.

The invention is defined in the independent claims, to which reference should now be made. Advantageous embodiments are set out in the sub claims. As the reservation request signal is transmitted using the radio resource allocated to each individual mobile communication terminal, there is no possibility of the reservation request signal colliding with the reservation request signal transmitted from another mobile communication terminal.

Furthermore, as there is no need to allocate a dedicated radio resource for the transmission of the reservation request signal, the amount of radio resources that can be allocated for the transmission of the upstream traffic does not decrease.

The mobile communication terminal may comprise, for example, a transmitting unit which transmits a signal via the radio resource allocated to the mobile communication terminal for the transmission of the prescribed control signal, and a signal selector unit which, when upstream traffic occurs, deselects the prescribed control signal and selects the reservation request signal as the signal to be transmitted via the allocated radio resource.

As the radio resource to be allocated to the mobile communication terminal, an upstream shared control channel may be adopted that is assigned from among upstream channel radio resources sharable by a plurality of mobile communication terminals, by changing at least either transmit time or frequency or spreading code for each of the plurality of mobile communication terminals, or alternatively, an upstream dedicated control channel may be adopted that is assigned to each individual one of the plurality of mobile communication terminals.

The prescribed control signal may be downstream channel quality information that indicates downlink channel quality obtained through measurement in the mobile communication terminal.

The base station may comprise, for example, a reservation request signal detecting unit which detects the reservation request signal transmitted from the mobile communication terminal, and a transmitting unit which, when the reservation request signal is detected, transmits a transmission permit signal to the mobile communication terminal to permit the transmission of the upstream traffic.

The base station may further comprise a storing unit which stores the downstream channel quality information received from the mobile communication terminal, and a transmission format selecting unit which selects a transmission format for downstream traffic in accordance with a prescribed determination method, based on the most recently received downstream channel quality information stored in the storing unit.
According to the present invention, collisions of reservation request signals occurring between mobile communication terminals can be prevented without decreasing the amount of radio resources that can be allocated for the transmission of the upstream traffic.

### BRIEF DESCRIPTION OF THE DRAWINGS

The present invention will be more clearly understood from the description as set forth below with reference to the accompanying drawings, wherein:
Fig. 1 is a diagram showing the configuration of a mobile communication system standardized by the 3GPP;
Fig. 2A is a time chart for an upstream signal to be transmitted from a mobile communication terminal to a base station;
Fig. 2B is a time chart for a downstream signal to be transmitted from the base station to the mobile communication terminal;
Figs. 3A and 3B are time charts for upstream signals to be transmitted to the base station from two different mobile communication terminals, respectively;
Fig. 3C is a time chart for a downstream signal to be transmitted from the base station to one of the mobile communication terminals that transmitted the upstream signals in Figs. 3A and 3B;
Fig. 4 is a diagram for explaining a problem associated with a prior art radio resource reservation method;
Fig. 5 is a schematic block diagram showing a first configuration example of a base station according to an embodiment of the present invention;
Fig. 6 is a schematic block diagram showing a first configuration example of a mobile communication terminal according to the embodiment of the present invention;
Fig. 7 is a state transition diagram of a mobile communication terminal defined by the 3.9-generation mobile communication architecture;
Fig. 8 is a time chart for a downstream pilot signal and broadcast information;
Fig. 9 is a flowchart illustrating the operation of the mobile communication terminal shown in Fig. 6;
Figs. 10A to 10D are time charts showing the signals to be transmitted to the base station from four mobile communication terminals, respectively;
Fig. 10E is a time chart showing the signal to be transmitted from the base station to one of the mobile communication terminals that transmitted the signals in Figs. 10A to 10D;
Fig. 10F is a time chart showing the received signals, i.e., the signals transmitted from the four mobile communication terminals and received at the base station;
Fig. 11 is a flowchart illustrating the operation of the base station shown in Fig. 5;
Fig. 12 is a diagram for explaining another example of the radio resource reservation method;
Fig. 13 is a schematic block diagram showing a second configuration example of the mobile communication terminal according to the embodiment of the present invention;
Fig. 14 is a flowchart illustrating the operation of the mobile communication terminal shown in Fig. 13;
Fig. 15 is a schematic block diagram showing a second configuration example of the base station according to the embodiment of the present invention; and
Fig. 16 is a flowchart illustrating the operation of the base station shown in Fig. 15.

### DESCRIPTION OF THE PREFERRED EMBODIMENTS

Preferred embodiments of the present invention will be described in detail below while referring to the attached figures.

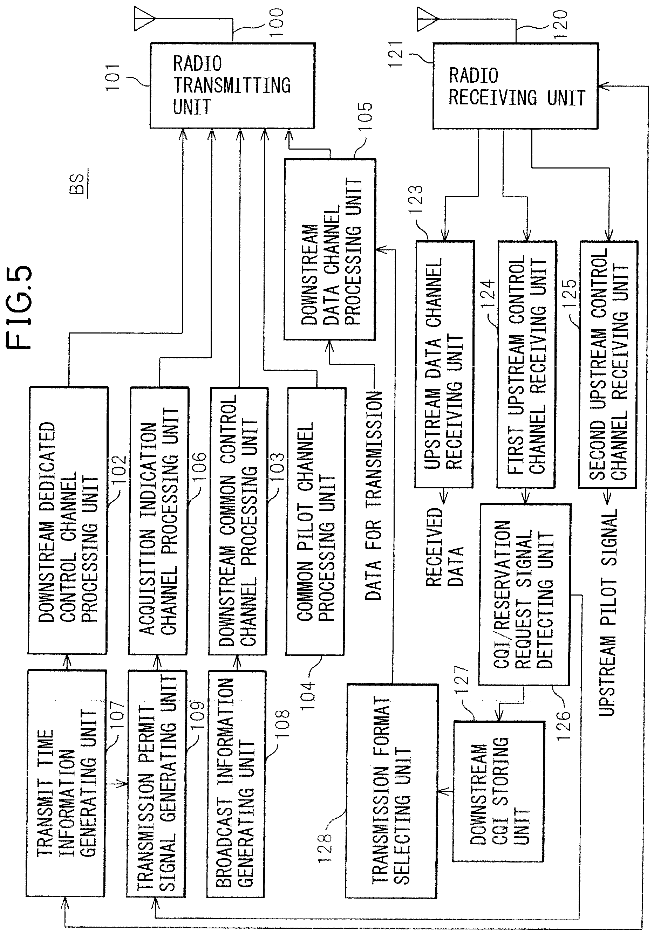

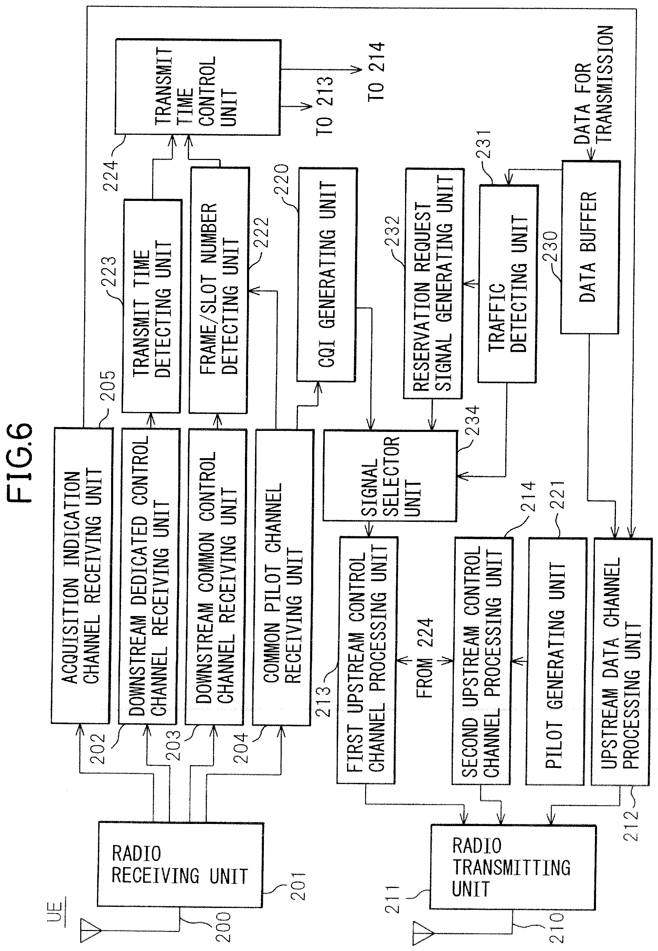

Fig. 5 is a schematic block diagram showing a first configuration example of a base station according to an embodiment of the present invention, and Fig. 6 is a schematic block diagram showing a first configuration example of a mobile communication terminal according to the embodiment of the present invention. The configuration of the mobile communication system according to the embodiment of the present invention is generally the same as that of the mobile communication system previously described with reference to Fig. 1, and therefore, the description thereof will not be repeated here.

In the mobile communication system of the present invention, the mobile communication terminal UE in a prescribed standby state transmits downstream channel quality information and an upstream pilot signal to the base station in an intermittent fashion, as will be described later, in order to conserve power during standby and in order to enable data transmission/reception to be initiated immediately upon occurrence of traffic.

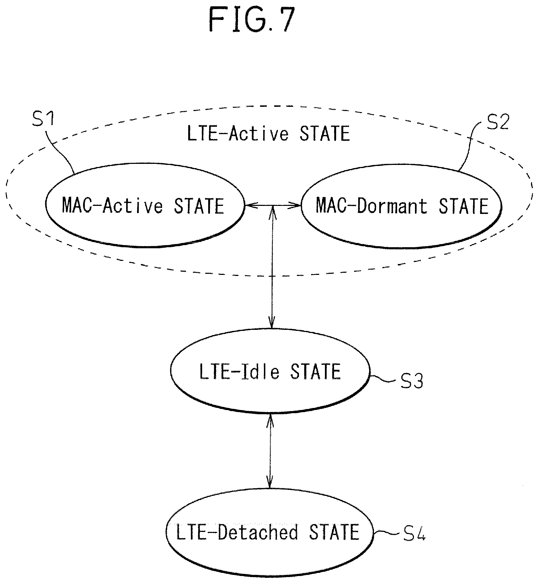

Preferably, the mobile communication system of the present invention supports the 3.9-generation mobile communication architecture (3GPP LTE) the standardization of which is currently underway, and the mobile communication terminal UE can take on any one of the states S1 to S4 shown in the state transition diagram (Fig. 7) defined by the 3.9-generation mobile communication architecture. In Fig. 7, LTE-Active state indicates the communication state, and MAC-Active state S1 contained therein indicates a state in which communication is proceeding continuously, while MAC-Dormant state S2 indicates a state in which control information is being transmitted and received in an intermittent fashion as described above. On the other hand, LTE-Idle state S3 indicates a standby state in which control information is neither transmitted or received, and LTE-Detached state S4 indicates a state in which the power of the mobile communication terminal UE is OFF.

Turning back to Fig. 5, the base station BS comprises a transmitting antenna 100 and a radio transmitting unit 101 for transmitting downstream radio signals to the mobile communication terminal UE. The downstream radio signals include various kinds of control information that are transmitted over a downstream dedicated control channel, a downstream common control channel, a common pilot channel, and an acquisition indication channel.

The downstream radio signals also include downstream traffic, such as voice data and packet data, that is transmitted over a downstream data channel.

The downstream dedicated control channel is a dedicated control channel that the base station BS assigns to each individual mobile communication terminal UE for the transmission of the control information to the individual mobile communication terminal UE, while the downstream common control channel is a control channel over which the base station BS transmits the control information simultaneously to all mobile communication terminals UEs.

The acquisition indication channel is a channel over which the base station BS that received a reservation request signal transmits, to the requesting mobile communication terminal UE, a transmission permit signal for permitting the transmission of upstream traffic.

The common pilot channel is a control channel over which the base station BS transmits the downstream pilot signal simultaneously to all mobile communication terminals UEs.

The base station BS comprises: a downstream dedicated control channel processing unit 102 and a downstream common control channel processing unit 103 which perform processing for the transmission of the signals over the downstream dedicated control channel and the downstream common control channel, respectively; a common pilot channel processing unit 104 which outputs the downlink pilot signal to be transmitted over the common pilot channel; and an acquisition indication channel processing unit 106 which performs processing for the transmission of the signal over the acquisition indication channel.

The base station BS further comprises a downstream data channel processing unit 105 which performs processing for the transmission of the signal over the downstream data channel.

The base station BS further comprises a receiving antenna 120 and a radio receiving unit 121 for receiving upstream radio signals from the mobile communication terminal UE. The upstream radio signals include various kinds of control information that are transmitted over a first and a second upstream control channel, and downstream traffic, such as voice data and packet data, that is transmitted over an upstream data channel.

The first and second upstream control channels are control channels over which each individual mobile communication terminal UE can transmit their control information. Such control channels may be configured as shared control channels which are assigned, from among the physical channel resources sharable by different mobile communication terminals UEs, to each individual mobile communication terminal UE by changing the time slot, frequency, or spreading code for each mobile communication terminal UE, or may be configured as dedicated control channels which are individually assigned to each different mobile communication terminal UE.

The base station BS comprises a first upstream control channel receiving unit 124 and a second upstream control channel receiving unit 125 which perform processing for the reception of the control information transmitted over the first and second upstream control channels, respectively, and an upstream data channel receiving unit 123 which performs processing for the reception of the upstream traffic transmitted over the upstream data channel.

The base station BS further comprises a transmit time information generating unit 107 which creates transmit time information for specifying the transmit time at which the mobile communication terminal UE should transmit the downstream channel quality information or the upstream pilot signal. The transmit time information generating unit 107 passes the created transmit time information to the downstream dedicated control channel processing unit 102, which transmits it to the mobile communication terminal UE over the downstream dedicated control channel.

A method of how the transmit time of the downstream channel quality information or the upstream pilot signal is specified by the transmit time information will be described later by way of example. Here, the transmit time information may be created, not in the base station BS, but in its serving radio network controller 2 shown in Fig. 1. In that case, the transmit time information generating unit 107 is provided in the radio network controller 2, not in the base station BS.

Turning back to Fig. 5, the base station BS comprises a broadcast information generating unit 108 which creates broadcast information. The broadcast information contains a frame number indicating the ordinal position of the frame that carries the downstream pilot signal currently being transmitted from the common pilot channel processing unit 104. The broadcast information generating unit 108 passes the broadcast information to the downstream common control channel processing unit 103, which transmits it to the mobile communication terminal UE over the common control channel.

The base station BS further comprises a transmission permit signal generating unit 109 which creates a transmission permit signal for permitting the transmission of the upstream traffic from the mobile communication terminal UE when a CQI/reservation request signal detecting unit 126 described below has detected the reservation request signal transmitted from the mobile communication terminal UE. The transmission permit signal generating unit 109 passes the transmission permit signal to the acquisition indication channel processing unit 106, which transmits it to the mobile communication terminal UE over the acquisition indication channel.

The base station BS further comprises the CQI/reservation request signal detecting unit 126, a downstream CQI storing unit 127, and a transmission format selecting unit 128.

The CQI/reservation request signal detecting unit 126 detects the downstream channel quality information and the reservation request signal transmitted from the mobile communication terminal UE over the first upstream control channel and received by the first upstream control channel receiving unit 124.

The downstream CQI storing unit 127 stores the most recent downstream channel quality information detected by the CQI/reservation request signal detecting unit 126 for each mobile communication terminal UE.

The transmission format selecting unit 128 selects the transmission format to be used for the transmission of the downstream traffic to each individual mobile communication terminal UE, for example, the modulation method, error-correction method, code rate, etc., based on the downstream channel quality information stored for each mobile communication terminal UE in the downstream CQI storing unit 127, and changes the transmission format of the downstream traffic to the selected format by changing the signal processing method that the downstream data channel processing unit 105 uses to process the data for transmission.

On the other hand, the mobile communication terminal UE shown in Fig. 6 comprises: a receiving antenna 200; a radio receiving unit 201 for receiving downstream radio signals from the base station BS; a downstream dedicated control channel receiving unit 202 which performs processing for the reception of the control information transmitted over the downstream dedicated control channel; a downstream common control channel receiving unit 203 which performs processing for the reception of the control information transmitted over the downstream common control channel; a common pilot channel receiving unit 204 which performs processing for the reception of the downstream pilot signal transmitted over the common pilot channel; and an acquisition indication channel receiving unit 205 which performs processing for the reception of the transmission permit signal transmitted over the acquisition indication channel.

The mobile communication terminal UE further comprises: a transmitting antenna 210; a radio transmitting unit 211 for transmitting upstream radio signals to the base station BS; an upstream data channel processing unit 212 which performs processing for the transmission of the signal over the upstream data channel; a first upstream control channel processing unit 213 which performs processing for the transmission of the signal over the first upstream control channel; and a second upstream control channel processing unit 214 which performs processing for the transmission of the signal over the second upstream control channel.

The mobile communication terminal UE further comprises a CQI generating unit 220, a pilot generating unit 221, a frame/slot number detecting unit 222, a transmit time detecting unit 223, and a transmit time control unit 224.

The CQI generating unit 220 measures quality metrics such as the SIR (Signal to Interference Ratio) of the common pilot channel, etc. that indicate the downlink channel quality, generates the downstream channel quality information containing such quality metrics, and supplies it to a signal selector unit 234 which will be described later. The downstream channel quality information passed to the first upstream control channel processing unit 213 via the signal selector unit 234 is transmitted to the base station BS over the first upstream control channel.

The pilot generating unit 221 generates the upstream pilot signal that the base station BS uses to measure the uplink channel quality, and supplies the pilot signal to the second upstream control channel processing unit 214. The upstream pilot signal is transmitted to the base station BS over the second upstream control channel.

The frame/slot number detecting unit 222 detects the frame number of the currently received downstream pilot contained in the broadcast information received by the downstream common control channel receiving unit 203. The frame/slot number detecting unit 222 also detects the slot number of the currently received time slot by measuring the time that has elapsed since the common pilot channel receiving unit 204 began to receive the downstream pilot of the current frame.

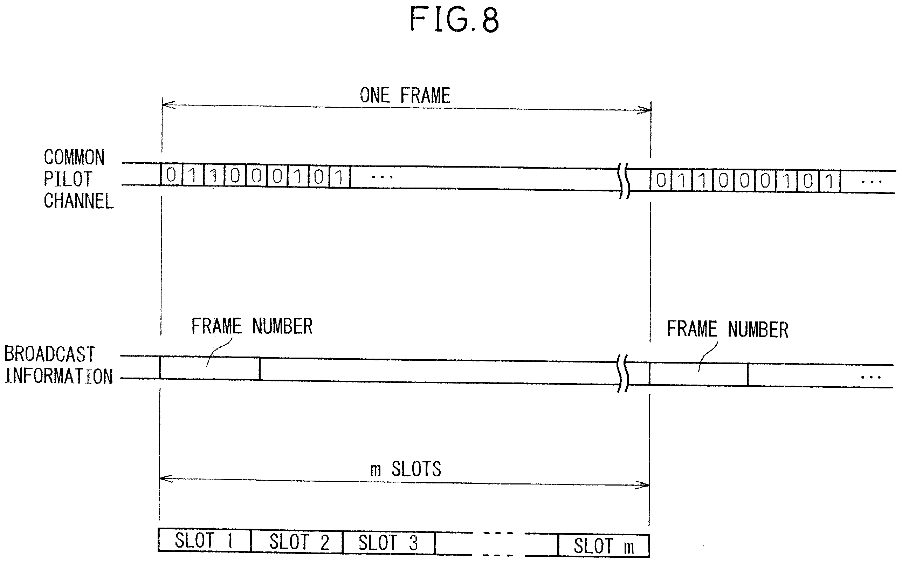

Fig. 8 is a time chart for the downstream pilot signal and the broadcast information. The downstream pilot signal flowing through the common pilot channel repeats a known bit pattern for each frame. The broadcast information contains the frame number of the currently transmitted downstream pilot signal. Since the bit pattern of the downstream pilot signal is known, the frame/slot number detecting unit 222 can determine the start time of the current frame by matching the currently received downstream pilot signal against the known bit pattern.

As shown, one frame is made up of a predetermined number of slots (m slots in the illustrated example) each of a known duration. The frame/slot number detecting unit 222 can determine the slot number of the current time slot by determining the time elapsed from the start time of the current frame.

The transmit time detecting unit 223 detects the transmit time information from the control information transmitted over the downstream dedicated control channel and received by the downstream dedicated control channel receiving unit 202.

The transmit time control unit 224 receives the transmit time information from the transmit time detecting unit 223 and the frame number and slot number of the current time slot from the frame/slot number detecting unit 222. Then, by referring to the transmit time information received from the transmit time detecting unit 223, the transmit time control unit 224 determines whether the current time slot is the time slot for the signal transmission, i.e., for the transmission of the downstream channel quality information or the upstream pilot signal.

Each time it is determined that the current time slot is the time slot for transmitting the downstream channel quality information, the transmit time control unit 224 outputs a transmission permit signal permitting the first upstream control channel processing unit 213 to transmit the downstream channel quality information, and each time it is determined that the current time slot is the time slot for transmitting the upstream pilot signal, the transmit time control unit 224 outputs a transmission permit signal permitting the second upstream control channel processing unit 214 to transmit the upstream pilot signal.

The transmit time information thus provides information by reference to which the transmit time control unit 224 determines the times at which the transmission permit signal for the downstream channel quality information and the transmission permit signal for the upstream pilot signal should be output to the first and second upstream control channel processing units 213 and 214, respectively.

For example, when transmitting the downstream channel quality information at every predetermined intervals of time corresponding to a predetermined number, n, of frames, the frame number of the time slot for transmitting the downstream channel quality information is divided by the predetermined number, n, of frames, and the resulting remainder and the divisor n, as well as the slot number of the time slot for transmitting the downstream channel quality information, are specified in the transmit time information.

Likewise, when transmitting the upstream pilot signal at every predetermined intervals of time corresponding to a predetermined number, n, of frames, the frame number of the time slot for transmitting the upstream pilot signal is divided by the predetermined number, n, of frames, and the resulting remainder and the divisor n, as well as the slot number of the time slot for transmitting the upstream pilot signal, are specified in the transmit time information.

Then, when the remainder obtained by dividing the frame number of the current time slot by the divisor n is equal to the remainder specified in the transmit time information for the transmit time of the downstream channel quality information, and when the slot number of the current time slot matches the slot number specified in the transmit time information for the transmit time of the downstream channel quality information, the transmit time control unit 224 outputs the transmission permit signal permitting the first upstream control channel processing unit 213 to transmit the downstream channel quality information.

Likewise, when the remainder obtained by dividing the frame number of the current time slot by the divisor n is equal to the remainder specified in the transmit time information for the transmit time of the upstream pilot signal, and when the slot number of the current time slot matches the slot number specified in the transmit time information for the transmit time of the upstream pilot signal, the transmit time control unit 224 outputs the transmission permit signal permitting the second upstream control channel processing unit 214 to transmit the upstream pilot signal.

By determining the transmit time information as described above, the transmit time control unit 224 can perform control so that the downstream channel quality information and the upstream pilot signal are transmitted out intermittently and periodically, while maintaining synchronization between their transmit times. The mobile communication terminal UE can transmit the downstream channel quality information and the upstream pilot signal intermittently and periodically by operating the transmit time control unit 224, for example, in the MAC-Dormant state S2 shown in Fig. 7.

The mobile communication terminal UE further comprises a data buffer 230, traffic detecting unit 231, reservation request signal generating unit 232, and signal selector unit 234.

The data buffer 230 is a storage device for storing the upstream traffic, i.e., the data to be transmitted over the upstream data channel. When the upstream traffic is input to the data buffer 230, the input upstream traffic is held in the data buffer 230 until the acquisition indication channel receiving unit 205 receives the transmission permit signal from the base station BS for that upstream traffic, permitting the data channel processing unit 212 to transmit the upstream traffic, and until the upstream channel processing unit 212 finishes transmitting the upstream traffic.

The traffic detecting unit 231 detects whether any untransmitted upstream traffic remains in the data buffer 230 and, if any such untransmitted upstream traffic remains, generates a traffic detection signal indicating the presence of the upstream traffic.

When the traffic detection signal is output from the traffic detecting unit 231, the reservation request signal generating unit 232 generates a reservation request signal supplies it to the signal selector unit 234.

The signal selector unit 234 receives the reservation request signal from the reservation request signal generating unit 232 and the downstream channel quality information from the CQI generating unit 220, and selects the downstream channel quality information for output to the first upstream control channel processing unit 213 when the traffic detection signal is not output from the traffic detecting unit 231; on the other hand, when the traffic detection signal is output from the traffic detecting unit 231, the reservation request signal is selected instead of the downstream channel quality information for output to the first upstream control channel processing unit 213. In this way, when there is no upstream traffic to be transmitted, the downstream channel quality information is selected as the signal to be transmitted over the first upstream control channel, and when upstream traffic occurs, the reservation request signal is selected as the signal to be transmitted over the first upstream control channel.

The actual mobile communication terminal UE further includes means for receiving and processing the downstream traffic transmitted from the base station BS but, for simplicity, the description of such means will not be given here.

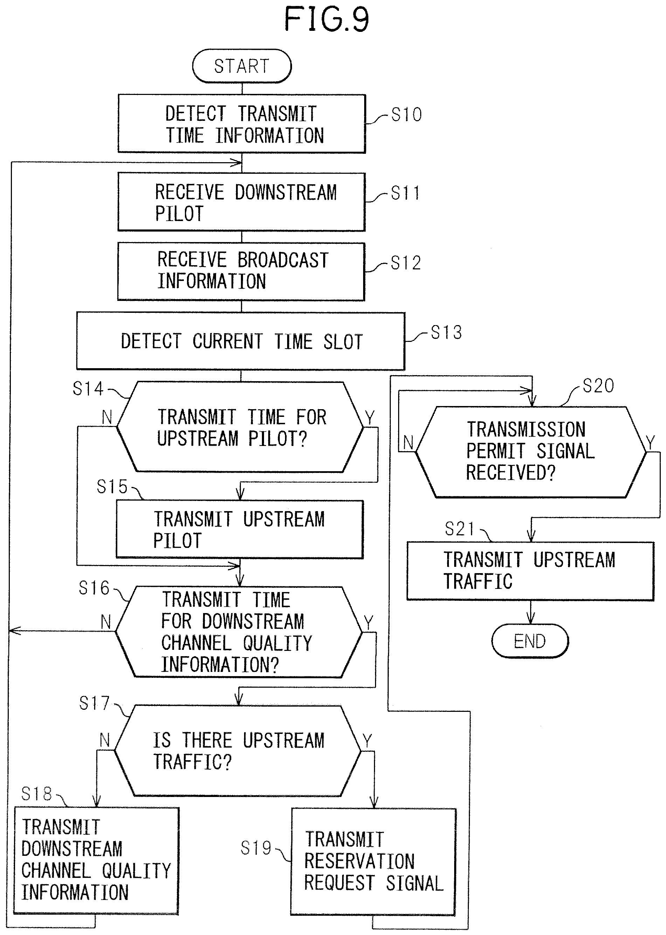

Fig. 9 is a flowchart illustrating the operation of the mobile communication terminal UE shown in Fig. 6.

In step S10, the downstream dedicated control channel receiving unit 202 receives via the downstream dedicated control channel the transmit time information that is generated by the transmit time information generating unit 107 in the base station BS and that specifies the transmit times for the downstream channel quality information and the upstream pilot signal. The transmit time detecting unit 223 detects the transmit time information specified for the mobile communication terminal UE from among the signals that the downstream dedicated control channel receiving unit 202 received via the downstream dedicated control channel.

When the common pilot channel receiving unit 204 receives the downstream pilot signal in step S11, the CQI generating unit 220 generates the downstream channel quality information. The common pilot channel receiving unit 204 also supplies the downstream pilot signal to the frame/slot number detecting unit 222.

In step S12, the downstream common control channel receiving unit 203 receives via the downstream common control channel the broadcast information generated by the broadcast information generating unit 108 in the base station BS.

Then, in step S13, the frame/slot number detecting unit 222 detects the frame number of the currently received downstream pilot signal from the broadcast information. Further, the frame/slot number detecting unit 222 detects the slot number of the current time slot as earlier described.

In step S14, the transmit time control unit 224 determines whether the current time slot whose frame number and slot number were detected in step S13 coincides with the transmit time that the transmit time information detected in step S10 specifies for the upstream pilot signal.

If it is determined in step S14 that the time slot coincides with the transmit time for the upstream pilot signal, the transmit time control unit 224 in step S15 outputs the transmission permit signal permitting the second upstream control channel processing unit 214 to transmit the upstream pilot signal. If the transmit time control unit 224 determines in step S14 that the time slot does not coincide with the transmit time for the upstream pilot signal, the process proceeds to step S16.

In step S16, the transmit time control unit 224 determines whether the current time slot whose frame number and slot number were detected in step S13 coincides with the transmit time that the transmit time information detected in step S10 specifies for the downstream channel quality information.

If it is determined in step S16 that the time slot does not coincide with the transmit time for the downstream channel quality information, the process returns to step S11, but if it is determined that the time slot coincides with the transmit time for the downstream channel quality information, the process proceeds to step S17.

In step S17, the traffic detecting unit 231 determines whether any untransmitted upstream traffic remains in the data buffer 230. If no such upstream traffic remains in the data buffer 230, the signal selector unit 234 selects the downstream channel quality information for output to the first upstream control channel processing unit 213, and in step S18, the downstream channel quality information is transmitted over the first upstream control channel. Then, the process returns to S11.

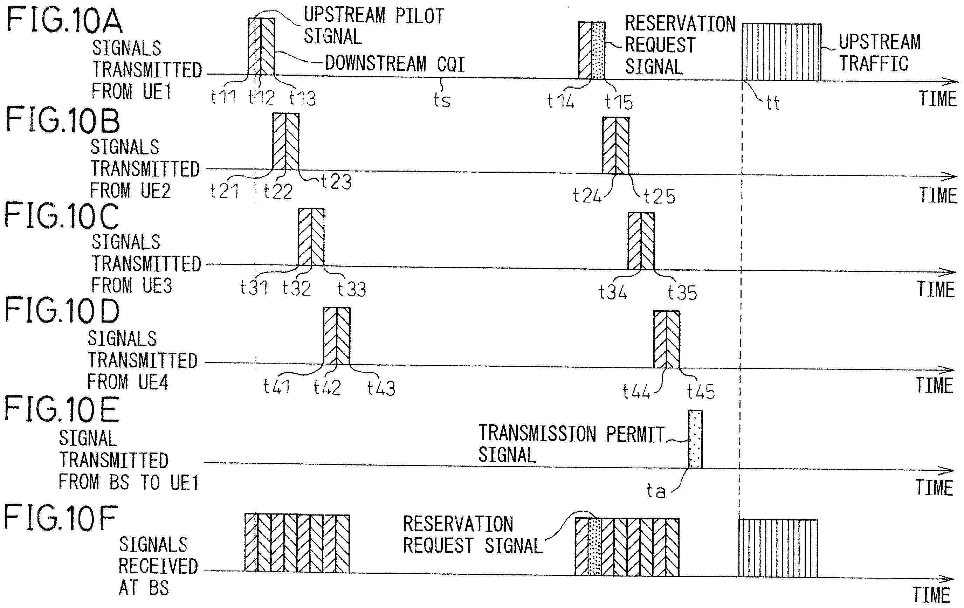

Figs. 10A to 10F show how the downstream channel quality information and the upstream pilot signal are transmitted from the mobile communication terminal UE to the base station BS in accordance with the above operating procedure. Referring to Figs. 10A to 10F, a description will be given of how radio resource reservations are performed between the base station BS shown in Fig. 5 and the mobile communication terminal UE shown in Fig. 6.

In the example shown in Figs. 10A to 10F, four mobile communication terminals UEs are connected to one base station BS: Figs. 10A to 10D are time charts showing the signals to be transmitted to the base station BS from the respective mobile communication terminals UE1 to UE4, Fig. 10E is a time chart showing the signal to be transmitted from the base station BS to the mobile communication terminal UE1, and Fig. 10F is a time chart showing the received signals, i.e., the signals transmitted from the mobile communication terminals UE1 to UE4 and received at the base station BS.

In the example shown in Figs. 10A to 10D, nonoverlapping time periods t11 to t13, t21 to t23, t31 to t33, and t41 to t43, as the time slots for transmitting the downstream channel quality information and the upstream pilot signal, are specified for the four mobile communication terminals UE1 to UE4, respectively, by the transmit time information transmitted from the base station BS. Accordingly, the mobile communication terminals UE1 to UE4 can transmit their respective control information to the base station BS without causing collisions between them. That is, the radio resource for transmitting these control signals is allocated to each individual mobile communication terminal by staggering the transmit times between the mobile communication terminals UE1 to UE4.

When no upstream traffic occurs from any one of the four mobile communication terminals UE1 to UE4, the four mobile communication terminals UE1 to UE4 transmit their respectively measured downstream channel quality information to the base station BS in the respectively assigned time periods t12 to t13, t22 to t23, t32 to t33, and t42 to t43.

Turning back to Fig. 9, if the traffic detecting unit 231 determines in step S17 that untransmitted upstream traffic remains in the data buffer 230, then in step S19 the signal selector unit 234 selects the reservation request signal for output to the first upstream control channel processing unit 213, and thus, the reservation request signal is transmitted over the first upstream control channel.

In the example shown in Fig. 10A, as upstream traffic has occurred from the mobile communication terminal UE1 at time ts, the mobile communication terminal UE1 transmits the reservation request signal to the base station BS. in the time period t14 to t15 that would otherwise be used for the transmission of the downstream channel quality information.

Turning back to Fig. 9, the upstream data channel processing unit 212 determines in step S20 whether the transmission permit signal transmitted from the base station BS is received by the acquisition indication channel receiving unit 205. The upstream data channel processing unit 212 holds off the transmission of the upstream traffic until the transmission permit detection signal indicating the reception of the transmission permit signal is received at the acquisition indication channel receiving unit 205 and, when the transmission permit detection signal is received from the acquisition indication channel receiving unit 205, the upstream data channel processing unit 212 transmits the upstream traffic in step S21.

In the example shown in Figs. 10A and 10E, the base station BS transmits the transmission permit signal to the mobile communication terminal UE1 at time ta, and the mobile communication terminal UE1 that received it transmits the upstream traffic at time tt.

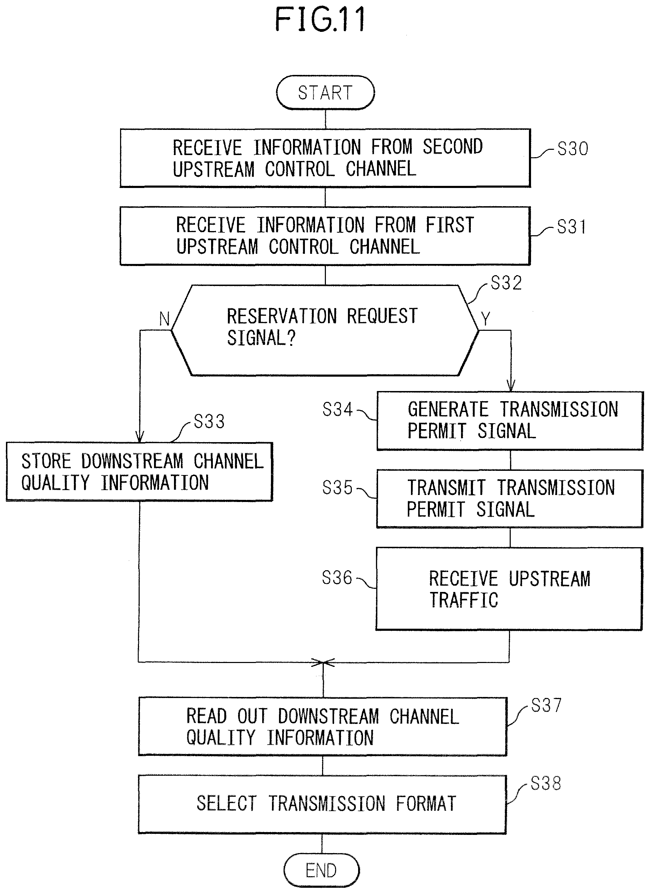

Fig. 11 is a flowchart illustrating the operation of the base station BS shown in Fig. 5.

In step S30, the second upstream control channel receiving unit 125 receives via the second upstream control channel the upstream pilot signal generated by the pilot generating unit 221 in the mobile communication terminal UE.

In step S31, the first upstream control channel receiving unit 124 receives the signal that the first upstream control channel processing unit 213 in the mobile communication terminal UE transmitted over the first upstream control channel, and supplies the received signal to the CQI/reservation request signal detecting unit 126.

In step S32, the CQI/reservation request signal detecting unit 126 determines whether the signal received in step S31 by the first upstream control channel receiving unit 124 is the downstream channel quality information generated by the CQI generating unit 220 in the mobile communication terminal UE or the reservation request signal generated by the reservation request signal generating unit 232, and thereby detects either the downstream channel quality information or the reservation request signal from the signal received by the first upstream control channel receiving unit 124. The CQI/reservation request signal detecting unit 126 distinguishes between the downstream channel quality information and the reservation request signal, for example, by detecting a flag appended to it.

When the detected signal is the downstream channel quality information, the CQI/reservation request signal detecting unit 126 in step S33 stores the downstream channel quality information in the downstream CQI storing unit 127, and the process proceeds to step S37.

On the other hand, when the detected signal is the reservation request signal, the process proceeds to step S34 where the CQI/reservation request signal detecting unit 126 supplies the reservation request detection signal indicating the detection of the reservation request signal to the transmission permit signal generating unit 109.

Based on the transmit time information generated by the transmit time information generating unit 107 and the input timing of the reservation request detection signal, the transmission permit signal generating unit 109 determines the mobile communication terminal UE that originated the reservation request signal and generates the transmission permit signal for that mobile communication terminal UE.

Then, in step S35, the transmission permit signal generating unit 109 passes the transmission permit signal to the acquisition indication channel processing unit 106 which transmits the signal to the mobile communication terminal UE. In step S36, the upstream data channel receiving unit 123 receives the upstream traffic transmitted from the mobile communication terminal UE.

In step S37, the transmission format selecting unit 128 reads out the most recently received downstream channel quality information stored in the downstream CQI storing unit 127 for each mobile communication terminal currently connected.

Then, in step S38, the transmission format selecting unit 128 selects the transmission format for the transmission of the downstream traffic in accordance with the downstream channel quality information stored for each mobile communication terminal and retrieved in step S37, and changes the transmission format of the downstream traffic to the selected format by changing the signal processing method that the downstream data channel processing unit 105 uses to process the data for transmission.

In the above embodiment, when upstream traffic occurs, the mobile communication terminal UE becomes unable to transmit the downstream channel quality information to the base station BS. As a result, if a change occurs in the propagation path of the downstream data channel, the transmission format may not be able to be changed in time, resulting in a degradation of data transmission efficiency.

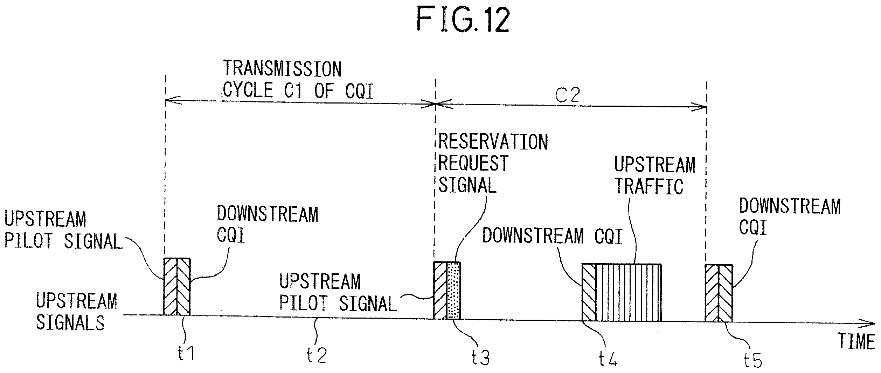

To address this, when upstream traffic occurs, the downstream channel quality information may be transmitted by inserting it in the upstream traffic, as shown in Fig. 12. Fig. 12 shows a time chart for the signals to be transmitted from the mobile communication terminal UE to the base station BS during two transmission cycles of the downstream channel quality information.

In the first transmission cycle C1 of the downstream channel quality information, the mobile communication terminal UE transmits the downstream channel quality information over the first upstream control channel at the originally scheduled time t1, but in the second transmission cycle C2 of the downstream channel quality information, because of the upstream traffic that occurred at time t2 the reservation request signal is transmitted over the first upstream control channel at the transmit time t3 originally allocated for the transmission of the downstream channel quality information.

In this way, when the mobile communication terminal UE is unable to transmit the downstream channel quality information at the originally scheduled transmit time t3, the mobile communication terminal UE inserts in the upstream traffic the downstream channel quality information originally scheduled to be transmitted at the transmit time t3 and transmits the downstream channel quality information thus inserted in the upstream traffic to the base station BS over the upstream data channel before the next transmit time t5 of the downstream channel quality information arrives. In the example of Fig. 12, the mobile communication terminal UE transmits the downstream channel quality information at time t4 by inserting it in the upstream traffic.

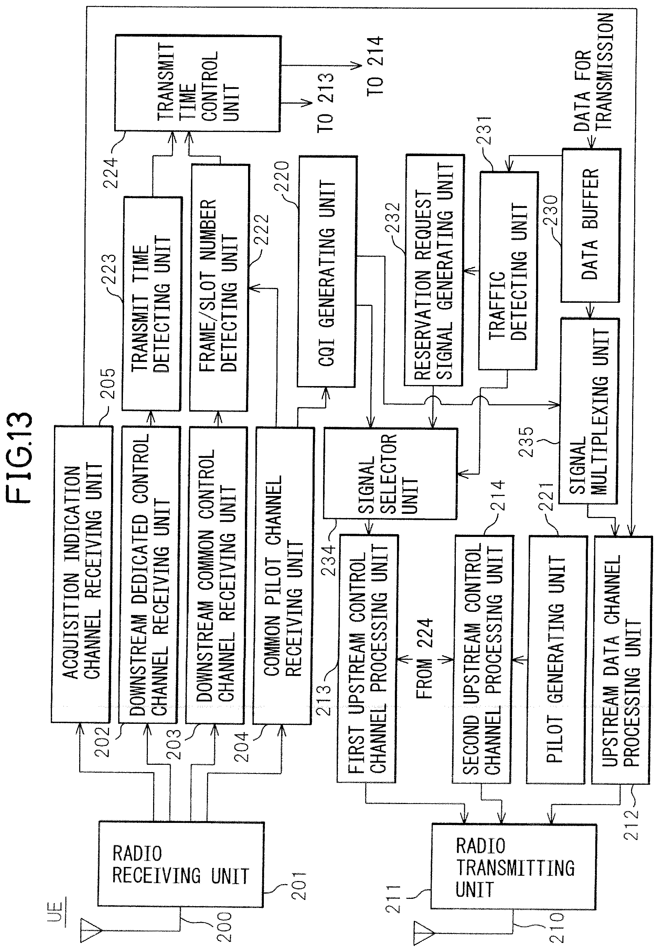

Fig. 13 is a schematic block diagram showing a second configuration example of the mobile communication terminal according to the embodiment of the present invention. The mobile communication terminal UE shown in Fig. 13 includes a signal multiplexing unit 235 which, when upstream traffic occurs, inserts the downstream channel quality information in the upstream traffic for transmission.

The signal multiplexing unit 235 receives the upstream traffic from the data buffer 230, inserts the downstream channel quality information received from the data CQI generating unit 220 into the designated position in the data train received from the data buffer 230, and supplies the resulting data to the upstream data channel processing unit 212.

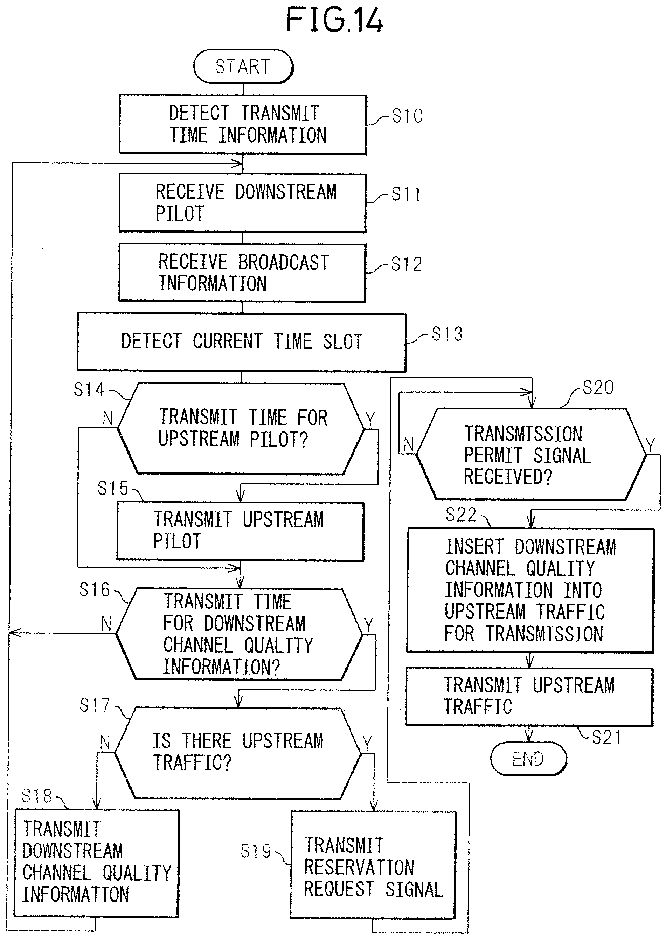

Fig. 14 is a flowchart illustrating the operation of the mobile communication terminal UE shown in Fig. 13. The operation from step S10 to step S20 is the same as the operation of the mobile communication terminal UE previously described with reference to Fig. 9.

When the upstream data channel processing unit 212 receives the transmission permit detection signal from the acquisition indication channel receiving unit 205, the upstream data channel processing unit 212 initiates the transmission of the upstream traffic stored in the data buffer 230; here, in step S22 the signal multiplexing unit 235 inserts the downstream channel quality information received from the data CQI generating unit 220 into the upstream traffic to be transmitted from the upstream data channel processing unit 212.

In step S21, the upstream data channel processing unit 212 transmits the upstream traffic containing the downstream channel quality information.

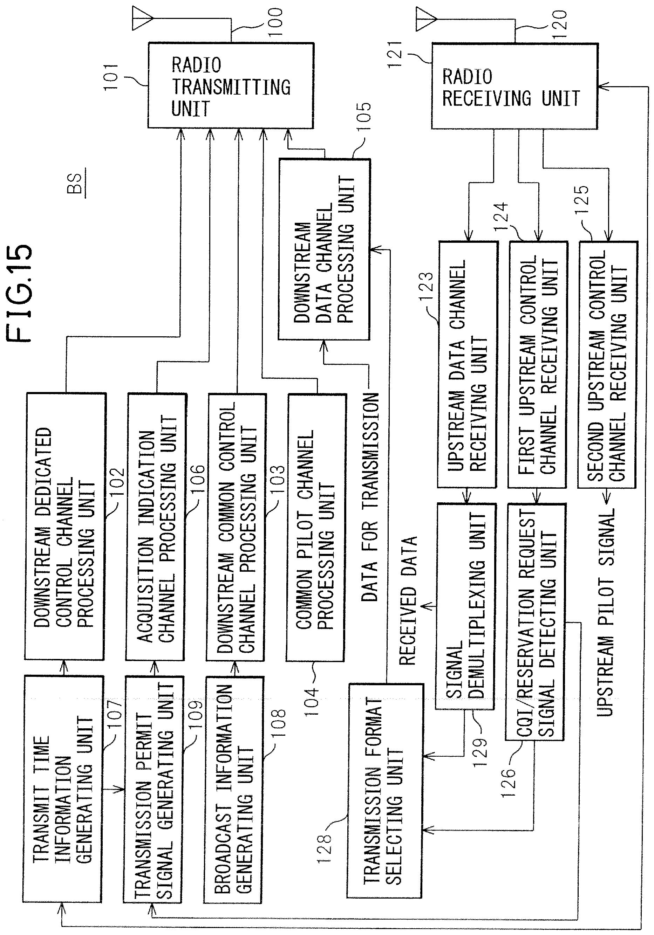

Fig. 15 is a schematic block diagram showing a second configuration example of the base station according to the embodiment of the present invention. The base station BS of this example includes a signal demultiplexing unit 129 which demultiplexes the downstream channel quality information from the upstream traffic.

The signal demultiplexing unit 129 demultiplexes the downstream channel quality information from the upstream traffic by extracting the downstream channel quality information inserted in the prescribed position in the data train received via the upstream data channel receiving unit 123. The extracted downstream channel quality information is then supplied to the transmission format selecting unit 128.

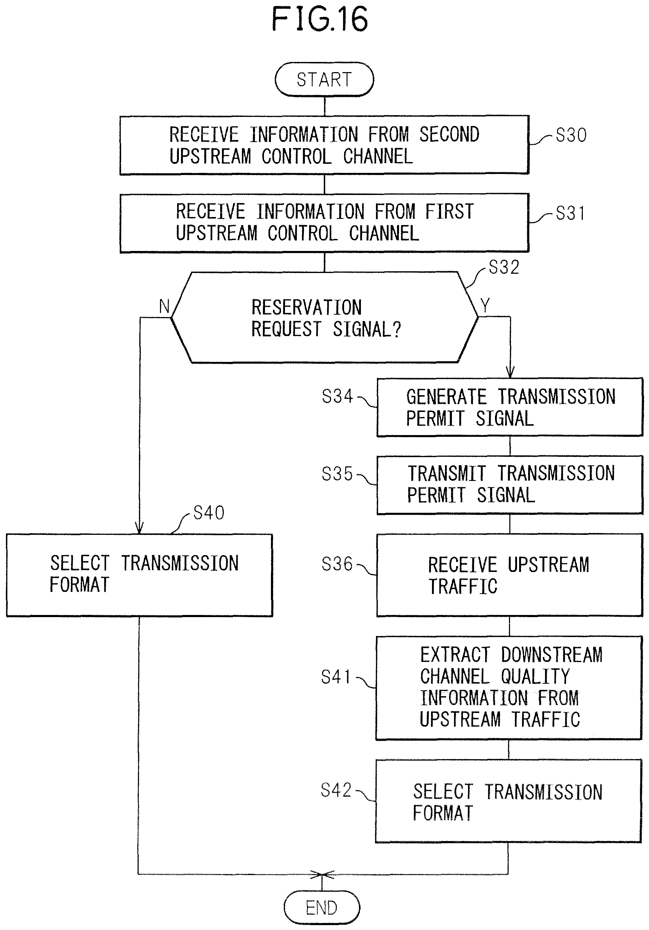

Fig. 16 is a flowchart illustrating the operation of the base station BS shown in Fig. 15. The operation from step S30 to step S32 is the same as the operation of the base station BS previously described with reference to Fig. 11.

When the signal detected from the signal received via the first upstream control channel receiving unit 124 is the downstream channel quality information, the CQI/reservation request signal detecting unit 126 in step S40 passes the downstream channel quality information to the transmission format selecting unit 128. The transmission format selecting unit 128 selects the transmission format for the transmission of the downstream traffic in accordance with the received downstream channel quality information, and changes the signal processing method that the downstream data channel processing unit 105 uses to process the data for transmission.

On the other hand, when the signal detected from the signal received via the first upstream control channel receiving unit 124 is the reservation request signal, the process proceeds to step S34. Then, as in the steps S34 to S36 shown in Fig. 11, the transmission permit signal is generated and transmitted, and the upstream traffic is received from the mobile communication terminal UE.

In step S41, the signal demultiplexing unit 129 demultiplexes the downstream channel quality information from the received upstream traffic. The downstream channel quality information thus extracted is passed to the transmission format selecting unit 128.

Then, in step S42, the transmission format selecting unit 128 selects the transmission format for the transmission of the downstream traffic in accordance with the received downstream channel quality information, and changes the signal processing method that the downstream data channel processing unit 105 uses to process the data for transmission.

The present invention can be applied widely to a mobile communication system that employs a random access scheme in which, prior to the transmission of upstream traffic, a mobile communication terminal transmits a reservation request signal to a base station for a radio resource necessary for the transmission of the upstream traffic, and also to a mobile communication terminal and a base station to be used in such a mobile communication system. In particular, the invention can be applied advantageously to a mobile communication terminal, a mobile communication system, and a base station that employ the 3.9-generation mobile communication architecture for which standardization work is currently underway.

While the invention has been described with reference to specific embodiments chosen for purpose of illustration, it should be apparent that numerous modifications could be made thereto, by those skilled in the art, without departing from the scope of the claims.

## Claims

1. A mobile communication terminal (UE) configured to transmit a reservation request signal to a base station (BS) for a radio resource for the transmission of upstream traffic, and to transmit a prescribed control signal to said base station (BS) periodically when being in a state in which control information is being transmitted and received in an intermittent fashion, comprising:
a transmitting unit (211) configured to transmit said reservation request signal via a radio resource allocated to said mobile communication terminal (UE) for the transmission of said prescribed control signal, when there is upstream traffic to be transmitted; and **characterised by** further comprising
a multiplexer (235) configured to insert said prescribed control signal into said upstream traffic, when said upstream traffic occurs.

2. A mobile communication terminal (UE) as claimed in claim 1, wherein said radio resource allocated to said mobile communication terminal (UE) is an upstream shared control channel that is assigned from among upstream channel radio resources sharable by a plurality of mobile communication terminals (UEs), by changing at least either transmit time or frequency or spreading code for each of said plurality of mobile communication terminals (UEs), or an upstream dedicated control channel that is assigned to each individual one of said plurality of mobile communication terminals (UEs).

3. A mobile communication terminal (UE) as claimed in claim 1, wherein said prescribed control signal is downstream channel quality information that indicates downlink channel quality obtained through measurement in said mobile communication terminal (UE).

4. A mobile communication system (1), comprising:
a mobile communication terminal (UE) according to any one of claims 1 to 3; and
a base station (BS) having a reservation request signal detecting unit (126) which detects said reservation request signal transmitted from said mobile communication terminal (UE), and a transmitting unit (101, 109) which, when said reservation request signal is detected, transmits a transmission permit signal to said mobile communication terminal (UE) to permit the transmission of said upstream traffic.

5. A communication method in which a reservation request signal is transmitted to a base station (BS) for a radio resource for the transmission of upstream traffic and a prescribed control signal is transmitted to said base station (BS) periodically when being in a state in which control information is being transmitted and received in an intermittent fashion, wherein said reservation request signal is transmitted to said base station (BS) via a radio resource allocated to said mobile communication terminal (UE) for the transmission of said prescribed control signal, when there is upstream traffic to be transmitted **characterised in that** said prescribed control signal is inserted into said upstream traffic for transmission, when said upstream traffic occurs.

6. A communication method as claimed in claim 5, wherein, when upstream traffic occurs, said prescribed control signal is deselected and said reservation request signal is selected as the signal to be transmitted via said allocated radio resource.

7. A communication method as claimed in claim 5, wherein said allocated radio resource is an upstream shared control channel that is assigned from among upstream channel radio resources sharable by a plurality of mobile communication terminals (UEs), by changing at least either a transmit time or a frequency or a spreading code for each of said plurality of mobile communication terminals (UEs), or an upstream dedicated control channel that is assigned to each individual one of said plurality of mobile communication terminals.

8. A communication method as claimed in claim 5, wherein said prescribed control signal is downstream channel quality information that indicates downlink channel quality.

9. A communication method as claimed in claim 8, wherein, in said base station (BS),
said downstream channel quality information is stored, and
a transmission format is selected for downstream traffic, in accordance with a prescribed determination method, based on the most recently received downstream channel quality information.

## Patentansprüche

1. Mobiles Kommunikationsendgerät (UE), das zum Übertragen eines Reservierungsanforderungssignals an eine Basisstation (BS) für eine Funkressource zur Übertragung von Upstream-Verkehr und zum periodischen Übertragen eines vorgeschriebenen Steuersignals an die Basisstation (BS) ausgelegt ist, wenn sie sich in einem Zustand befindet, in dem Steuerinformationen auf intermittierende Weise übertragen und empfangen werden, umfassend:
eine Übertragungseinheit (211), die zum Übertragen des Reservierungsanforderungssignals über eine Funkressource ausgelegt ist, die dem mobilen Kommunikationsendgerät (UE) zur Übertragung des vorgeschriebenen Steuersignals zugewiesen wurde, wenn Upstream-Verkehr zu übertragen ist, und
**dadurch gekennzeichnet, dass** es ferner umfasst
einen Multiplexer (235), der zum Einfügen des vorgeschriebenen Steuersignals in den Upstream-Verkehr ausgelegt ist, wenn dieser Upstream-Verkehr vorkommt.

2. Mobiles Kommunikationsendgerät (UE) nach Anspruch 1, wobei die dem mobilen Kommunikationsendgerät (UE) zugewiesene Funkressource ein gemeinsam genutzter Upstream-Steuerkanal ist, der durch Ändern mindestens entweder einer Übertragungszeit oder einer Frequenz oder eines Spreizcodes jedes einer Vielzahl von mobilen Kommunikationsendgeräten (UE) aus Upstream-Kanalfunkressourcen zugewiesen wird, die von der Vielzahl von mobilen Kommunikationsendgeräten (UE) gemeinsam nutzbar sind, oder ein dedizierter Upstream-Steuerkanal, der jedem einzelnen der Vielzahl von mobilen Kommunikationsendgeräten (UE) zugewiesen wird.

3. Mobiles Kommunikationsendgerät (UE) nach Anspruch 1, wobei das vorgeschriebene Steuersignal eine Downstream-Kanalqualitätsinformation ist, die die durch Messung in dem mobilen Kommunikationsendgerät (UE) erhaltene Downlink-Kanalqualität angibt.

4. Mobilkommunikationssystem (1), umfassend:
ein mobiles Kommunikationsendgerät (UE) nach einem der Ansprüche 1 bis 3 und
eine Basisstation (BS) mit einer Einheit zum Erkennen eines Reservierungsanforderungssignals (126), die das von dem mobilen Kommunikationsendgerät (UE) gesendete Reservierungsanforderungssignal erkennt, und eine Übertragungseinheit (101, 109), die beim Erkennen des Reservierungsanforderungssignals ein Übertragungszulassungssignal an das mobile Kommunikationsendgerät (UE) sendet, um die Übertragung des Upstream-Verkehrs zuzulassen.

5. Kommunikationsverfahren, bei dem ein Reservierungsanforderungssignal an eine Basisstation (BS) für eine Funkressource zur Übertragung von Upstream-Verkehr übertragen wird und ein vorgeschriebenes Steuersignal periodisch an die Basisstation (BS) übertragen wird, wenn sie sich in einem Zustand befindet, in dem Steuerinformationen auf intermittierende Weise übertragen und empfangen werden, wobei
das Reservierungsanforderungssignal über eine Funkressource, die dem mobilen Kommunikationsendgerät (UE) zur Übertragung des vorgeschriebenen Steuersignals zugewiesen wurde, zur Basisstation (BS) übertragen wird, wenn Upstream-Verkehr zu übertragen ist, **dadurch gekennzeichnet, dass**
das vorgeschriebene Steuersignal in den Upstream-Verkehr eingefügt wird, wenn der Upstream-Verkehr vorkommt.

6. Kommunikationsverfahren nach Anspruch 5, wobei das vorgeschriebene Steuersignal bei vorkommendem Upstream-Verkehr als das über die zugewiesene Funkressource zu übertragende Signal abgewählt und das Reservierungsanforderungssignal ausgewählt wird.

7. Kommunikationsverfahren nach Anspruch 5, wobei die zugewiesene Funkressource ein gemeinsam genutzter Upstream-Steuerkanal ist, der durch Ändern mindestens entweder einer Übertragungszeit oder einer Frequenz oder eines Spreizcodes jedes einer Vielzahl von mobilen Kommunikationsendgeräten (UE) aus Upstream-Kanalfunkressourcen zugewiesen wird, die von der Vielzahl von mobilen Kommunikationsendgeräten (UE) gemeinsam nutzbar sind, oder ein dedizierter Upstream-Steuerkanal, der jedem einzelnen der Vielzahl von mobilen Kommunikationsendgeräten zugewiesen wird.

8. Kommunikationsverfahren nach Anspruch 5, wobei das vorgeschriebene Steuersignal eine Downstream-Kanalqualitätsinformation ist, die die Downlink-Kanalqualität angibt.

9. Kommunikationsverfahren nach Anspruch 8, wobei in der Basisstation (BS)
die Downstream-Kanalqualitätsinformation gespeichert wird und
ein Übertragungsformat für Downstream-Verkehr in Übereinstimmung mit einem vorgeschriebenen Bestimmungsverfahren auf der Grundlage der zuletzt empfangenen Downstream-Kanalqualitätsinformation gewählt wird.

## Revendications

1. Terminal de communication mobile (UE) configuré pour transmettre un signal de demande de réservation à une station de base (BS) pour une ressource radio pour la transmission d'un trafic amont, et pour transmettre périodiquement un signal de commande prescrit à ladite station de base (BS) lorsqu'il est dans un état dans lequel des informations de commande sont transmises et reçues de manière intermittente, comprenant :
une unité de transmission (211) configurée pour transmettre ledit signal de demande de réservation via une ressource radio allouée audit terminal de communication mobile (UE) pour la transmission dudit signal de commande prescrit, lorsqu'il y a un trafic amont à transmettre ; et
**caractérisé en ce qu'**il comprend en outre
un multiplexeur (235) configuré pour insérer ledit signal de commande prescrit dans ledit trafic amont, lorsque survient ledit trafic amont.

2. Terminal de communication mobile (UE) selon la revendication 1, dans lequel ladite ressource radio allouée audit terminal de communication mobile (UE) est un canal de commande partagé amont qui est attribué parmi des ressources radio de canal amont pouvant être partagées par une pluralité de terminaux de communications mobiles (UE), en changeant au moins un temps de transmission ou une fréquence ou un code d'étalement pour chacun de ladite pluralité de terminaux de communication mobiles (UE), ou un canal de commande dédié amont qui est attribué à chaque terminal individuel de ladite pluralité de terminaux de communication mobiles (UE).

3. Terminal de communication mobile (UE) selon la revendication 1, dans lequel ledit signal de commande prescrit est une information de qualité de canal aval qui indique une qualité de canal descendant obtenue par mesure dans ledit terminal de communication mobile (UE).

4. Système de communication mobile (1), comprenant :
un terminal de communication mobile (UE) selon l'une quelconque des revendications 1 à 3 ; et
une station de base (BS) ayant une unité de détection de signal de demande de réservation (126) qui détecte ledit signal de demande de réservation transmis par ledit terminal de communication mobile (UE), et une unité de transmission (101, 109) qui, lorsque ledit signal de demande de réservation est détecté, transmet un signal d'autorisation de transmission audit terminal de communication mobile (UE) pour autoriser la transmission dudit trafic amont.

5. Procédé de communication dans lequel un signal de demande de réservation est transmis à une station de base (BS) pour une ressource radio pour la transmission d'un trafic amont et un signal de commande prescrit est transmis périodiquement à ladite station de base (BS) lorsqu'il est dans un état dans lequel des informations de commande sont transmises et reçues de manière intermittente, dans lequel
ledit signal de demande de réservation est transmis à ladite station de base (BS) via une ressource radio allouée audit terminal de communication mobile (UE) pour la transmission dudit signal de commande prescrit, lorsqu'il y a un trafic amont à transmettre ; **caractérisé en ce que**
ledit signal de commande prescrit est inséré dans ledit trafic amont pour transmission, lorsque survient ledit trafic amont.

6. Procédé de communication selon la revendication 5, dans lequel, lorsque le trafic amont survient, ledit signal de commande prescrit est désélectionné et ledit signal de demande de réservation est sélectionné en tant que signal à transmettre via ladite ressource radio allouée.

7. Procédé de communication selon la revendication 5, dans lequel ladite ressource radio allouée est un canal de commande partagé amont qui est attribué parmi des ressources radio de canal amont pouvant être partagées par une pluralité de terminaux de communication mobiles (UEs), en changeant au moins un temps de transmission ou une fréquence ou un code d'étalement pour chacun de ladite pluralité de terminaux de communication mobiles (UE), ou un canal de commande dédié amont qui est affecté à chaque terminal individuel de ladite pluralité de terminaux de communication mobiles.

8. Procédé de communication selon la revendication 5, dans lequel ledit signal de commande prescrit est une information de qualité de canal aval qui indique une qualité de canal descendant.

9. Procédé de communication selon la revendication 8, dans lequel, dans ladite station de base (BS),
ladite information de qualité de canal aval est stockée, et
un format de transmission est sélectionné pour un trafic aval, conformément à un procédé de détermination prescrit, sur la base des informations de qualité de canal aval les plus récemment reçues.
